# EUROPEAN PATENT SPECIFICATION

(11) **EP 3 334 680 B1**
(45) Date of publication and mention of the grant of the patent: **24.06.2020**
(21) Application number: 15901820.9
(22) Date of filing: 14.08.2015
(51) Int. Cl.: B67B 7/48, B09B 3/00, B65D 83/38, B67B 7/00, F17C 13/00

(54) **PUNCTURING DEVICE FOR AEROSOL CONTAINERS**
EINSTECHVORRICHTUNG FÜR AEROSOLBEHÄLTER
DISPOSITIF DE PERFORATION POUR RÉCIPIENTS AÉROSOL

(43) Date of publication of application: 20.06.2018
(73) Proprietor: Justrite Manufacturing Company, L.L.C., Des Plaines, IL 60016-5315 (US)
(72) Inventor: CAMPBELL, Michael, C., Norfolk, VA 23518 (US)
(74) Representative: Pfenning, Meinig & Partner mbB
(86) International application number: PCT/US2015/045366
(87) International publication number: WO 2017/030540

(56) References cited:
- US-A- 2 553 942
- US-A- 4 934 055
- US-A- 5 141 656
- US-A- 5 271 437
- US-A- 5 309 956
- US-A1- 2006 191 422
- US-A1- 2013 042 944
- US-A1- 2013 042 944
- US-B1- 6 318 252
- US-B1- 6 481 470
- US-B1- 6 481 470

## Description

### BACKGROUND OF THE INVENTION

### 1. Field of the Invention

This invention relates generally to the art of waste disposal, and more specifically to devices for relieving aerosol cans of pressure and emptying them of residual contents in preparation for disposing or recycling them.

### 2. Description of Related Art

This invention has uses in the area of waste disposal, such as in devices and systems for evacuating aerosol cans, and other containers of pressurized gases and residue contents.

Pressurized aerosol cans, and other pressurized containers, have widespread usage in homes and industry. It has long been recognized that improper disposal of such containers constitutes a safety hazard in that excessive external heat and/or pressure can cause them to explode if they have not been relieved of internal pressure. Similarly, the release of contents, both propellant gases and dangerous residue materials, from such containers, often damages the environment. In addition, it has long been recognized that disposing of such containers often constitutes an environmental hazard because of their dangerous contents.

Due to these hazards, the Environmental Protection Agency (EPA), an agency of the U.S. Government, regulates disposal of pressurized containers as well as their contents for industries. These regulations mandate that certain businesses and industries must puncture all pressurized containers prior to their disposal. Further, these regulations require that certain contents of pressurized containers be captured and disposed of in particular manners. Depending upon the natures of such contents, disposal methods can involve permanent disposal through incineration, landfills or other means; treatment and permanent disposal; treatment and recycling; and treatment and reclamation for a new use. An example of reclamation would be recovering a solvent contained in waste paint for use as a fuel. But, whichever disposal method is used, the EPA requires many industries to relieve the pressure in pressurized containers prior to transporting them for disposal.

In addition to the above requirements of the EPA, many states within the United States and countries outside the United States have requirements similar to, or even stricter than, those of the EPA. For example, California closely regulates release of gases into the atmosphere. In this respect, California considers some propellants used in aerosol cans to be contaminants, particularly when they contain small aerosolized particles of materials, such as insecticides, paints and the like, which were in the aerosol cans.

Further, while EPA regulations do not apply to individuals and many small businesses, many of these still desire to dispose of hazardous contents of such containers, and the containers themselves, in a manner which provides personal safety and protects the environment, and would do so if a reliable, inexpensive apparatus therefor exists.

Document US 2013/042944 A1 discloses a device for puncturing a pressurized container.

There have been a number of prior-art other devices suggested for piercing pressurized containers such as are described in U.S. Pat. No. 3,303,968 to Compere; U.S. Pat. No. 3,333,735 to Odasso; U.S. Pat. No. 3,828,976 to Sidelinker; U.S. Pat. No. 3,926,340 to Tygenhof; U.S. Pat. No. 4,500,015 to Penney, and U.S. Pat. No. 4,934,055 to Chambers. Some of these devices do not adequately provide for disposal of gases and residual contents of the pressurized containers, such as the devices of Compere, Sidelinker, Odasso, Tygenhof and Penney.

The device of Chambers (U.S. Pat. No. 4,934,055) does provide for disposal of contents of pressurized cans, however, this device appears to be somewhat limited in application having an unduly small, custom-built, reservoir and apparently requiring an undue amount of strength and dexterity to operate. Also, the device of this patent does not appear to be sufficiently durable to withstand repeated use.

A number of US Patents to Michael Campbell describe systems for evacuating gaseous materials from aerosol containers and other types of containers, see U.S. Pat. Nos. 5,163,585; 5,265,762; and 5,992,475. Most of these systems involve sealing a wall of an aerosol can on a seat, puncturing the can below the seat, and evacuating the contents of the can into a drum.

The device disclosed in another Campbell patent, U.S. Pat. No. 5,163,585, discloses a device for puncturing aerosol containers. In this device, the container is punctured in the side which does not allow for complete emptying of the container. Additionally, the container being emptied is not sealed such that leakage of the contents is possible.

A widely used device for piercing pressurized containers is described in U.S. Pat. No. 5,265,762 to Campbell et al. This Campbell et al. patent describes a puncturing device for aerosol containers which includes an elongated tubular housing having male threads at a second end for being screwed into a first, or large, bung-plug hole (bunghole) of an off-the-shelf drum, such as a 15, 30 or 55 gallon drum. An aerosol can to be disposed of is inserted into a first opening at a first end of the cylindrical housing, nozzle-end-first, until a shoulder of the aerosol can engages a sealing shoulder seat in the elongated tubular housing. A puncturing member, as part of a mechanism mounted to the side of the housing, is driven through the housing to create a puncture opening in the aerosol can below the sealing shoulder seat. Propelling gas and residue material are driven from the aerosol can, by pressure of the propellant gas, through the puncture opening and through the second end opening of the housing into the drum. The sealing shoulder seat prevents the propellant gas and residue from retro-movement toward the first end opening of the housing (which opens to the environment) and ensures that these materials go into the drum.

Campbell et al (U.S. Pat. No. 5,265,762) also describes a filter screwed into a second, small, bunghole of the drum for filtering propellant gases escaping from the second bunghole of the drum to the environment for cleaning escaping gaseous vapors of atmosphere-harmful materials.

U.S. Pat. No. 5,992,475 to Campbell discloses a spring-activated check valve at the second end of the tubular wall of the housing with a spring-activated valve poppet positioned at the second end for opening and closing in response to pressure. Basically this check valve opens to allow propellant gases to escape from the punctured aerosol cans into the drum and then closes to prevent retrograde movement of the gases from the drum back through the piercing-device housing once the cans are removed. U.S. Pat. No. 5,181,462 to Issac also describes a similar valve.

Other patents which describe devices and systems relating to the system described in Campbell et al (U.S. Pat. No. 5,265,762) include U.S. Pat. No. 3,358,883 to Loe; U.S. Pat. No. 3,828,976 to Sidelinker; 3,926,340 to Tygenhof; U.S. Pat. No. 4,349,054 to Chipman et al; U.S. Pat. No. 5,114,043 to Collins, Jr.; U.S. Pat. No. 5,181,462 to Isaac; U.S. Pat. No. 5,271,437 to O'Brien et al; U.S. Pat. No. 5,284,997 to Spearman et al; U.S. Pat. No. 5,309,956 to Hajma; U.S. Pat. No. 5,365,982 to O'Neill; and U.S. Pat. No. 6,422,273 to Campbell. Additional patent documents disclosing devices for puncturing pressurized cans and/or disposing of their contents include U.S. Pat. No. 5,067,529 to Gonzalez-Miller et al., U.S. Pat. No. 4,459,906 to Cound et al., and U.S. Pat. No. 4,407,341 to Feldt et al. as well as Soviet patent document 821399 and German Offenlegungsschrift 1,607,991. All of these patent documents disclose relatively complicated, expensive, and large machines.

It is an object of the invention to provide a device for puncturing a pressurized container to relieve the pressure therein and for releasing gases and residual contents thereof into a collection receptacle which is not unduly complicated, which can be easily transported to a site and installed thereat, which is relatively easy and convenient to use requiring no outside power, which can be used with off-the-shelf receptacles in common us, which is relatively inexpensive to manufacture, which operates in a manner complying with EPA regulations in a safe and efficient manner, and which can accommodate pressurized containers of various sizes.

It is another object of the invention to provide a device for puncturing a pressurized container to relieve the pressure therein along with completely emptying the contents thereof.

It is another object of the invention to provide a device for puncturing a pressurized container to remove all contents in order to minimize the opportunity for the contents to catch fire.

It is yet another object of this invention to render aerosol cans recyclable as scrap metal in safe condition for handling, with no shredded metal shards or sharp protrusions.

Finally, it is an object of the present invention to accomplish the foregoing objectives in a simple and cost effective manner.

The above and further objects, details and advantages of the invention will become apparent from the following detailed description, when read in conjunction with the accompanying drawings.

### SUMMARY OF THE INVENTION

The present invention addresses these needs by providing a device for puncturing a pressurized container for relieving the pressure therein and for releasing the residual contents thereof into a drum of a type having an end wall with a surrounding protruding peripheral rim. The device includes a generally elongated housing member defining an elongated cavity with inner and outer surfaces and with openings at first and second ends thereof for receiving a pressurized container at the first end and further includes an attachment means for securing the second end of the elongated housing member to the end wall of the drum for collection by the drum of contents expelled from the pressurized container through the second end. A puncturing member mounted within the elongated housing member generally parallel to the inner and outer surfaces of the elongated housing member, intermediate the first and second ends and a distance from the inner surface of the elongated housing member for piercing the pressurized container in the elongated cavity whereby gases and residual contents thereof are emptied into the drum through the opening at the second end. A force-applying member is movably mounted on the elongated housing member for engaging the pressurized container positioned in the elongated cavity and forcing the pressurized container towards the second end of the elongated housing member and onto the puncturing member. The device further includes an auxiliary support means for extending from the elongated housing member to the protruding peripheral rim of the drum for stabilizing relative movement between the elongated housing member and the drum during operation of the device. The attachment means is preferably a threaded terminus of the elongated housing member for engaging threads of the end wall of the drum. The auxiliary support means may include a locking member to prevent the device from being removed from the drum. The elongated housing member, the force-applying member and the device further including an auxiliary support means are of aluminum or may be coated with a non-stick coating. The puncturing member preferably comprises a hollow puncturing pin, the pointed tip of which is preferably of a non-sparking metal, extending upward towards the first end of the elongated housing member, and includes a spring for biasing the pressurized container towards the first end of the elongated housing member when the force-applying member is not engaged with the pressurized container with gases and residual contents being emptied into the drum through the hollow puncturing pin. The elongated housing member further comprises a shelf member extending from the inner surface of the elongated housing member which shelf member includes an opening through which the puncturing member extends towards the first end of the elongated housing member. An alignment member is preferably mounted within the elongated cavity intermediate the first and second ends and through which the puncturing member extends such that the pressurized container is retained in an orientation which is generally parallel to a lengthwise center line of the elongated cavity. The device may include a counter means, preferably enclosed within a housing, cooperatively engaged with the puncturing means wherein the counter means records each piercing of the pressurized container and the counter means may be reset to its initial counter setting. The force-applying member, comprises a cap which may be rotatable about a pin between a position directly over the elongated housing member and a position which is not over the elongated housing member, a rack gear attached to the cap, a paw gear interconnected with the rack gear such that rotation of the paw gear causes vertical movement of the rack gear, and an activation wheel attached to the paw gear such that rotation of the activation wheel causes rotation of the paw gear wherein rotation of the activation wheel results in vertical movement of the cap, and downward movement of the cap causes the cap to engage the pressurized container positioned in the elongated cavity and to force the pressurized container towards the second end of the elongated housing member and onto the puncturing member. A locking member releasably retains the cap in position directly over the elongated housing member. The cap further includes a height adjustment member, which may include a recessed magnetic member. The rack gear, the paw gear, and the activation wheel are of aluminum or may be coated with a non-stick coating

### BRIEF DESCRIPTION OF THE DRAWINGS

A more complete description of the subject matter of the present invention and the advantages thereof, can be achieved by reference to the following detailed description by which reference is made to the accompanying drawings in which:
FIG. 1a is a perspective, exploded view of a first-embodiment device of this invention;
FIG. 1b is an enlarged side view of the puncturing member of the first embodiment device of this invention;
FIG. 2 is a side view of the first embodiment device of this invention installed for operation;
FIG. 3 is a side view showing the first step in operating the first embodiment device of this invention;
FIG. 4 is a side view showing the second step in operating the first embodiment device of this invention;
FIG. 5 is a side view showing the third step in operating the first embodiment device of this invention;
FIG. 6 is a side view showing the fourth step in operating the first embodiment device of this invention;
FIG. 7 is a side view showing the fifth step in operating the first embodiment device of this invention;
FIG. 8 is a side view showing the sixth step in operating the first embodiment device of this invention;
FIG. 9 is a side view showing the seventh step in operating the first embodiment device of this invention;
FIG. 10 is a side view showing the eighth step in operating the first embodiment device of this invention;
FIG. 11a is a perspective view showing an alternate embodiment device of this invention; and
FIG. 11b is a perspective view showing an alternate embodiment device of this invention.

### Element listing

- 20: pressurized container
- 22: elongated housing member
- 24: cap
- 26: rack gear
- 28: activation wheel
- 29: shelf member
- 30: puncturing member
- 32: shoulder pin
- 34: spring pin
- 36: height adapter
- 38: alignment cone
- 40: compression spring
- 42: o-ring
- 44: shoulder pin
- 46: retaining ring
- 48: paw gear
- 50: tamper proof fastener
- 51: screw
- 52: counter
- 54: tamper proof fastener
- 56: grounding screw
- 57: auxiliary support member
- 58: locking tab
- 60: collection receptacle
- 61: filter
- 62: contents
- 64: handle
- 66: pin

### DETAILED DESCRIPTION OF THE PREFERRED EMBODIMENT

The following detailed description is of the best presently contemplated mode of carrying out the invention. This description is not to be taken in a limiting sense, but is made merely for the purpose of illustrating general principles of embodiments of the invention. The embodiments of the invention and the various features and advantageous details thereof are more fully explained with reference to the non-limiting embodiments and examples that are described and/or illustrated in the accompanying drawings and set forth in the following description. It should be noted that the features illustrated in the drawings are not necessarily drawn to scale, and the features of one embodiment may be employed with the other embodiments as the skilled artisan recognizes, even if not explicitly stated herein. Descriptions of well-known components and techniques may be omitted to avoid obscuring the invention. The examples used herein are intended merely to facilitate an understanding of ways in which the invention may be practiced and to further enable those skilled in the art to practice the invention. Accordingly, the examples and embodiments set forth herein should not be construed as limiting the scope of the invention, which is defined by the appended claims. Moreover, it is noted that like reference numerals represent similar parts throughout the several views of the drawings.

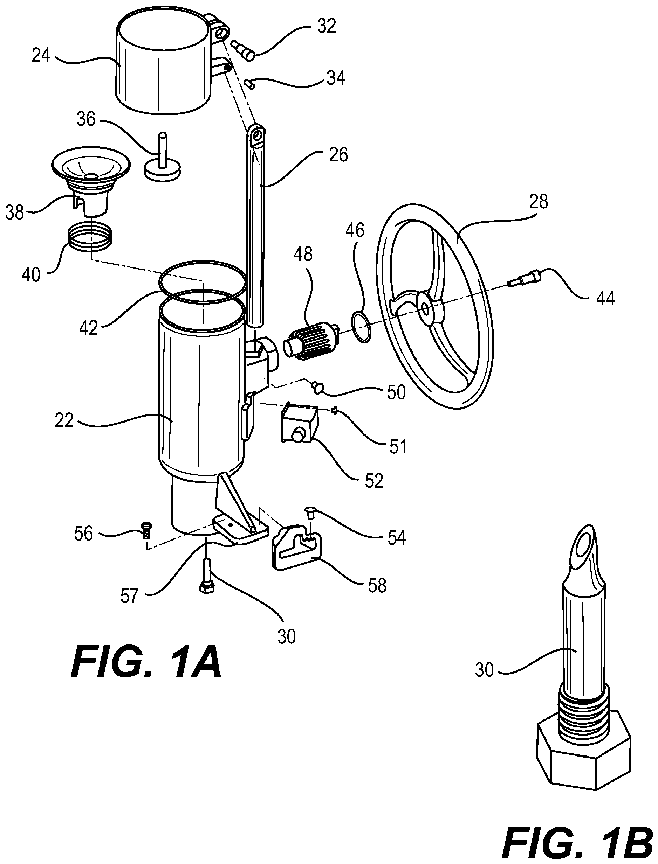

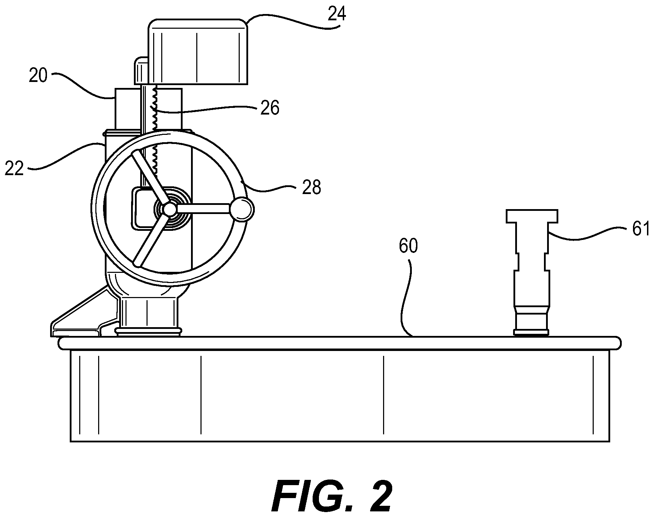

Generally, as shown in Figs. 1 - 11, the invention is a device for puncturing a pressurized container 20 for relieving the pressure therein and for releasing the gases and residual contents thereof directly down into a collection receptacle 60 which device comprises an elongated housing member 22 defining an elongated cavity with first and second openings at first and second ends thereof for receiving an inverted pressurized container 20 in the first opening, the housing member 22 including an auxiliary support member 57 for securing the second end of the housing member 22 to a receptacle 60 for collecting contents 10 expelled when a hollow puncturing member 30, which is mounted within the housing member 22 in an orientation generally parallel to the pressurized container 20 and the elongated housing member 22 and which is cooperatively engaged with a counter 52, extends through the intermediate aperture and pierces a pressurized container 20 in the cavity. The counter 52 acts to record the actions of the puncturing member 30. The housing member 22 preferably further defines a shelf member 29 extending from the inner surface of the elongated housing member 22 which shelf member 29 includes an opening through which the puncturing member 30 extends towards the first end of the elongated housing member 22. The puncturing member 30 is mounted within the housing member 22 such that it punctures the pressurized container 20 at the lowest possible location to essentially completely evacuate all contents 10. An o-ring 42 is included at the first end of the housing member 22 for forming a seal between the housing member 22 and the pressurized container 20. An alignment cone 38 is positioned within the housing member 22 near the second end of the housing member 22 and through which the puncturing member 30 extends to align the pressurized container 20 within the housing member 22.

As shown generally in Fig. 1, a device for puncturing a pressurized container 20 for relieving the pressure therein and for releasing into a collection container or receptacle 60 the gases and residual contents thereof generally comprises an elongated housing member 22, a puncturing member 30, a counter 52, a cap 24, and an auxiliary support member 57.

The generally elongated housing member 22 defines an elongated cavity with first and second openings at first and second ends thereof. The elongated housing member 22 has a shelf member 29 extending from the inner surface of the elongated housing member 22. The shelf member 29 includes an opening from which the puncturing member 30 extends towards the first end of the elongated housing member 22 positioned between the first and second open ends towards the second open end of the housing member 22.

As can be seen in Fig. 1, the elongated housing member 22, below the shelf member 29, defines a reduced cross-sectional area to allow for a connection between the elongated housing member 22 and the collection receptacle 60. The elongated housing member 22 further includes a threaded terminus, with male threads thereon near the second end of the housing member 22 which is dimensioned, and which has a thread pitch, for selectively engaging and disengaging a female threaded bung of the collection receptacle 60, such as a standard off-the-shelf 5 gal., 20 gal., 30 gal., 55 gal. drum 38 and others (although other embodiments can be sized and threaded to fit other collection containers or receptacles). In this regard, the standard off-the-shelf drums mentioned above all have 2 inch filling or spout bung holes with standard threads as well as 3/4 inch venting bung holes, also with standard threads. Similarly, drums meeting standards of other countries also usually have large and small threaded bung holes.

The puncturing member 30 comprises a hollow elongate pin having a puncturing end and which is mounted through an opening in the shelf member 29 such that the puncturing end extends upward toward the first end of the elongated housing member 22. The puncturing member 30 further includes a spring which biases the pressurized container 20 towards the first end of said elongated housing member 22 when the pressurized container 20 is not being forced towards the second end of the housing member 22. The puncturing pin is preferably hollow and beveled such that the initial puncture is smaller than the diameter of the pin. This provides control over the flow of materials from the pressurized container. Of particular import is that the puncturing pin punctures the pressurized container 20 in a direction which is generally parallel to the pressurized container 20. This improves the ability to empty the contents 62 of the pressurized container 20 completely and directly downward into a collection receptacle 60. The device punctures the pressurized container 20 at slightly off of the dead center of the domed top of the pressurized container 20 to achieve maximum depletion of the contents 62 of the pressurized container.

In order to force the pressurized container 20 down onto the puncturing member 30, a cap 24 is placed into contact with the bottom end of the pressurized container 20 which extends from the elongated housing member 22 upon insertion of the top end of the pressurized container 20 into the housing member 22. If needed or desired, a height adapter 36 may include a magnet recessed into its lower end which then may be attached to the inside of the cap 24. The adapter 36 enables the emptying of pressurized containers 20 of different heights and also, by relying on magnetic attraction, assists in removing shorter pressurized containers 20 that that fit entirely within the housing member 22. The cap 24 is rotatably mounted to a rack gear 26 such that the cap 24 may be swung away from the pressurized container 20 to provide sufficient room for inserting and removing the pressurized container 20 from within the elongated housing member 22. When rotated over the pressurized container 20, a spring pin 34 locks the cap 24 in place. The cap 24 is then brought into contact with the pressurized container 20 by activation of the rack gear 26 through a paw gear 48 by an activation wheel 28. As the wheel 28 is turned, the paw gear 48 interacts with teeth on the rack gear 26 to lower the cap 24, thus applying force to the pressurized container 20 to cause the puncturing member 30 to puncture the pressurized container 20 allowing the contents 10 of the pressurized container 20 to exit directly down into the collection receptacle 60. A single turn of the activation wheel 28 fully raises or lowers the cap 24, depending on the direction of the turn. The device generated in excess of 1000 pounds of downward force with minimal operator input. If desired, a tamper proof fastener 50 may be utilized to lock the paw gear 48 in place to prevent use of the device.

Cooperatively engaged with the puncturing member 30 is the counter 52. The counter 52 cooperates with the puncturing member 30 such that with each puncture made by the puncturing member 30, the counter 52 records such puncture. A pressurized container 20 requires one action of the puncturing member 30 to completely empty the container 20 of contents 62. It is critical to record each action of the puncturing member 30 as certain elements of the device, such as a filter 61 (described below), require replacement after a specific number of punctures. Additionally, maintenance must be performed on the device after a specific number of actions of the puncturing member 30. The counter 52 may preferably be capable of being reset to facilitate the recordal of puncturing actions. In a further preferred embodiment, the counter 52 is enclosed in a housing to prevent accidentally or unintentionally resetting the counter 52. An example of a counter which may be employed in this device is described in co-pending U.S. Patent Application Serial No. 13/212346, filed August 18, 2011 for "GAS EVACUATION SYSTEM WITH COUNTER'.

The auxiliary support member 57 extends from the outer surface of the second end of the elongated housing member 22 for stabilization of the device in use and, optionally, for locking the device to the collection receptacle 60. The auxiliary support member 57 includes a grounding screw 56 to which an electrical wire can be attached. It should be noted that the foot of the auxiliary support member 57 is spaced immediately adjacent, or just a little above, the threads of the threaded terminus of the elongated housing member 22. The auxiliary support member 57 optionally includes a locking tab 58 for locking the device to the collection receptacle 60. A tamper proof fastener 54 provides additional support for locking the device to the collection receptacle 60 to prevent removal.

The device can be constructed of various materials, however, in a preferred embodiment, the major parts of the device, including the housing member 22, the rack gear 26, the activation wheel 28, the paw gear 48, the alignment cone 38 and the auxiliary support member 57 are formed of aluminum, preferably, hardened aircraft aluminum, so that they are light in weight. In order to improve wear, minimize static conductivity and protect against potential sparking, these elements are also coated with an industrial non-stick coating. Alternatively, these parts can be manufactured entirely from a material which resists sparking. The o-ring 42 is a typical o-ring made from an elastomeric material. In a preferred embodiment, the puncturing member 30 is made from low carbon content stainless steel. Also, in a preferred embodiment the pointed tip of the puncturing member 30 is made of stainless steel or of some other spark minimizing alloy, to minimize sparking and thereby promote safety.

In operation, the device is mounted on a collection receptacle 60, such as a common off-the-shelf drum (typically a 55 gal. or 30 gal. drum) by screwing the threaded terminus of the elongated housing member 22 into the normal female threaded, 2 inch, filling bung opening of the collection receptacle 60.

A filter 61, which can be part of a kit including the puncturing device, is mounted in the normal 3/4 inch vent opening of the collection receptacle 60 for filtering escaping propellant gases and collecting gaseous vapors thereof. Upon operation, pressure in the punctured pressurized container 20 forces gases and residue material from the container 20 through the hollow core of the puncturing member 30 into the collection receptacle 60 to which the elongated housing member 22 is screwed. Propellants and other gases escape through the filter 61 and are thereby filtered, with gaseous vapors being collected. Possible filters for such use are described in U.S. Pat. No. 6,644,515 or U.S. Pat. No. 6,422,273, both issued to Campbell. An improved filter is also described in co-pending provisional patent application serial no. 61/973,374, filed April 1, 2014 for "Improved filter for a propellant gas evacuation system" and pending provisional patent application serial no. 62/063,885, filed October 14, 2014 for "Puncturing device for aerosol containers and improved filter".

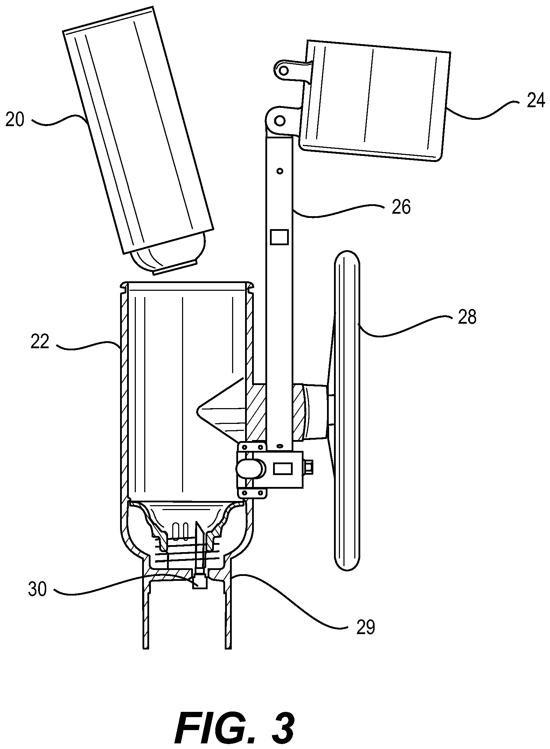

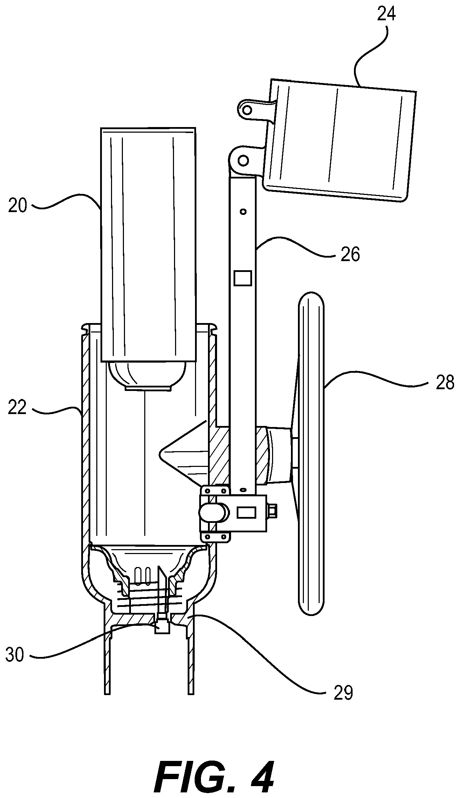

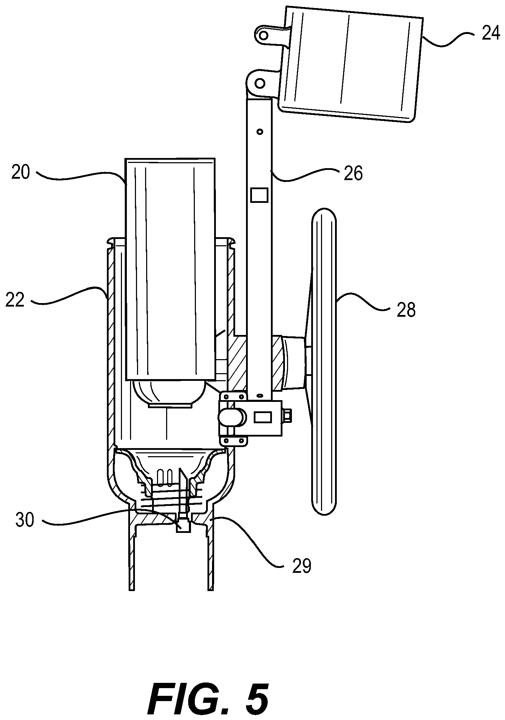

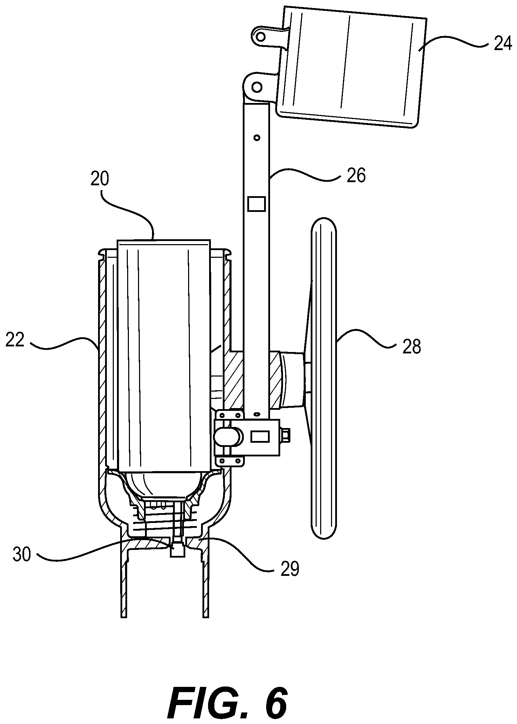

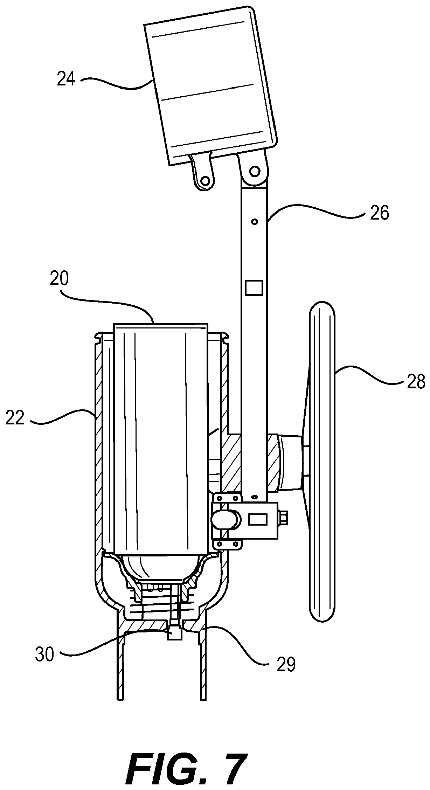

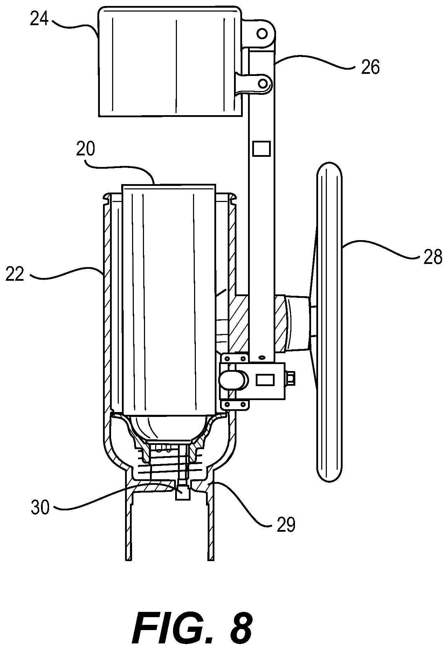

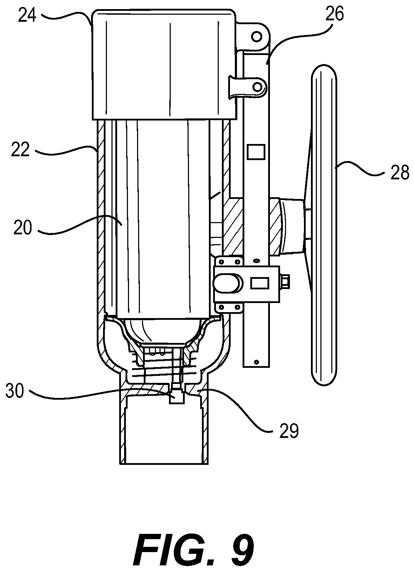

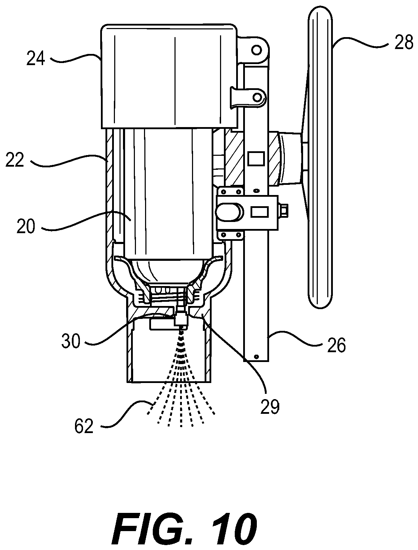

Operation of the device is shown in Figs. 3 - 10. In Fig. 3, the rack gear 26 has been raised by rotating the activation wheel 28. The cap 24 has been rotated into a position away from the elongated housing member 22. The pressurized container 20 is placed into the elongated housing member 22 with the top of the pressurized container 20 positioned to enter the first opening of the elongated housing member 22. Fig. 4 shows the pressurized container 20 entering the elongated housing member 22, top first. At the step in the process, the cap 24 remains in position away from the first opening of the elongated housing member 22 and the rack gear 26 remains in its raised position. Fig. 5 shows the pressurized container 20 continuing towards the puncturing member 30. Fig. 6 shows the pressurized container 20 in contact with, but not yet punctured by the puncturing member 30. The alignment cone 38 acts to retain the pressurized container 20 in an orientation generally parallel to the elongated housing member 22. At this point, force is required to puncture the pressurized container 20. As shown in Fig. 7, the cap 24 is rotated towards the elongated housing member 22. Fig. 8 shows the completed rotation of the cap 24 such that the cap 24 is positioned directly over the elongated housing member 22 and the pressurized container 20. In Fig. 9, the cap 24 is in brought into contact with the pressurized container 20 by turning the activation wheel 28 which lowers the rack gear 26 and, in turn, the cap 24. As shown in Fig. 10, further turning of the activation wheel 28 forces the cap 24 downwards, thus forcing the pressurized container 20 to be punctured by the puncturing member 30, allowing the contents 62 of the pressurized container 20 to exit directly down into the collection receptacle 60.

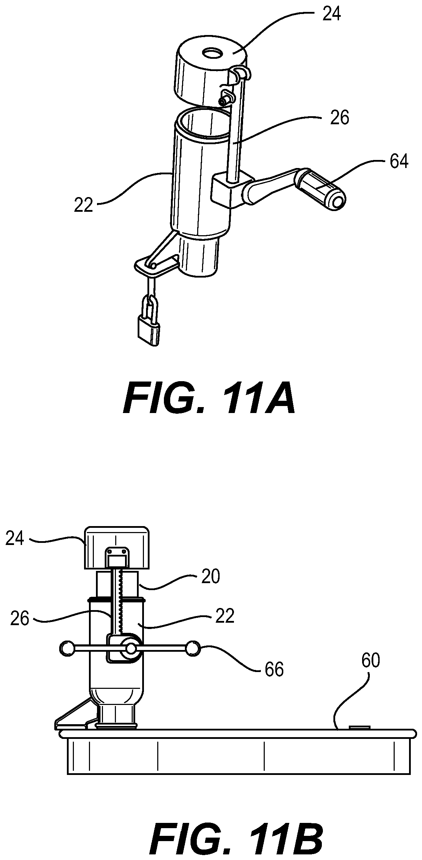

Figs. 11a and 11b disclose alternate embodiments of this invention in which, respectively, a handle 64 or a pin 66, is used to raise and lower the rack gear 26 in place of the activation wheel 28 shown in Figs. 1 - 10. Otherwise, the embodiment of Figs. 11a and 11b operate substantially the same as does the embodiment of Figs. 1-10.

The device can further include an indicator to relay that the pressurized container 20 is empty or substantially empty. The cap 24 of the device can include a small hole, preferably about 1/8 of an inch in diameter, to which a hollow tube is connected. The end of the hollow tube not in connection with the small hole is closed. A small item, such as a small, lightweight ball, is located within the tube. During the evacuation process, propellant pressure forces the small item to the end of the hollow tube, thus indicating to the operator that the evacuation process is ongoing. Once it is safe to remove the pressurized container 20, propellant pressure declines and the small item falls within the hollow tube. The operator then knows it is safe to remove the pressurized container 20.

It can be appreciated by those of ordinary skill in the art that the device for puncturing a pressurized container 20 of this invention does not require a power source and can be located indoors or outdoors with no consideration for access to electricity or other power sources.

Also, the device of this invention can be directly attached to existing off-the-shelf collection containers or receptacles for collection of residual contents. That is, since the threaded terminus of the elongated housing member 22 is sized to engage bung threads of typical storage drums, the invention can be easily transported without consideration for transporting large containers and can be inexpensively manufactured. It should be understood that although the device has been described herein to be mounted on drums standard in the United States, it could be sized to drum standards in any country.

Yet another benefit of this invention is that it accommodates most sizes of pressurized containers 20, such as aerosol cans. Regardless of can diameters or lengths, the internal support shoulder of the elongated housing member 22 is positioned and sized such that each inverted dome of an aerosol can is punctured at exactly the same spot as those of other cans. Conversely, this invention cannot be used to puncture a pressurized container 20, generally an aerosol can, with its nozzle-end, or dome-end, up. This is a safety feature, because the flat bottom of a container does not maximize evacuation of liquid residuals as does the funnel-shaped dome-end.

It is particularly beneficial, however, that, although the aerosol can is punctured at its downwardly-facing nozzle-end, the puncturing action cannot take place unless the cap 24 is in place. This prevents the aerosol can from accidentally moving upwards to injure an operator.

This invention is portable, lightweight and inexpensive, all features which facilitate compliance with regulations within a manufacturing plant. That is, the invention can be located at each "work center" at the convenience of workers, rather than in one centralized location which is where a large expensive machine would typically be located. That is, if a facility employs expensive machines, it is not economical to have many such machines spread out through the facility. However, manufacturing facilities have, in addition to their normal production line, maintenance shops where many aerosol cans are used, such as pump shops, machine shops, electrical shops, HVAC shops, maintenance shops etc.

Not only does this invention allow pressurized cans to be brought to "atmospheric pressure" prior to disposal, it also increases opportunities for recycling the cans. That is, aerosol cans which often contain chemicals will not be accepted by recyclers unless relieved of pressure. The 3 billion aerosol cans annually used in the US today amount to 375,000 tons of steel.

The lever operation of the device of this invention allows workers to easily puncture cans without endangering themselves, since compressed fluids are maintained in sealed portions of the elongated housing member 22, and workers are not in direct contact with the cans when they are punctured.

This invention facilitates the filtering of gases released from aerosol cans since filters can be relatively easily mounted to vent bung ports of standard drums.

Further, the device of this invention can be easily disassembled for required maintenance such as replacing pins or seals.

The auxiliary support member 57 of this invention improves its operation by dissipating downwardly applied forces to a rim of the receptacle, which is usually the strongest part of the receptacle. Thus, the auxiliary support member 57 protects an area around a bung opening of a drum.

Further, the auxiliary support member 57 facilitates the electrical grounding of a drum, which is required by some governmental agencies, to prevent build-up of static electricity. By providing a grounding screw 56 on the auxiliary support member 57, such grounding can be easily accomplished.

## Claims

1. A device for puncturing a pressurized container (20) for relieving the pressure therein and for releasing the residual contents thereof into a drum (60) of a type having an end wall with a surrounding protruding peripheral rim, said device comprising:
a generally elongated housing member (22) defining an elongated cavity with inner and outer surfaces and with openings at first and second ends thereof for receiving a pressurized container (20) at said first end and further including an attachment means for securing said second end of said elongated housing member (22) to said end wall of said drum (60) for collection by said drum (60) of contents expelled from said pressurized container (20) through said second end;
a puncturing member (30) mounted within said elongated housing member (22) generally parallel to said inner and outer surfaces of said elongated housing member (22), intermediate said first and second ends and a distance from said inner surface of said elongated housing member (22) for piercing said pressurized container (20) in said elongated cavity whereby gases and residual contents thereof are emptied into said drum (60) through said opening at said second end;
a force-applying member (24) movably mounted on said elongated housing member (22) for engaging said pressurized container (20) positioned in said elongated cavity and forcing said pressurized container (20) towards said second end of said elongated housing member (22) and onto said puncturing member (30);
wherein said force-applying member, comprises:
a cap (24);
a rack gear (26) attached to said cap (24);
a paw gear (48) interconnected with said rack gear (26) such that rotation of said paw gear (48) causes vertical movement of said rack gear (26); and
an activation wheel (28) attached to said paw gear (48) such that rotation of said activation wheel (28) causes rotation of said paw gear (48) wherein rotation of said activation wheel (28) results in vertical movement of said cap (24), and downward movement of said cap (24) causes said cap (24) to engage said pressurized container (20) positioned in said elongated cavity and to force said pressurized container (20) towards said second end of said elongated housing member (22) and onto said puncturing member (30).
said device further including an auxiliary support means for extending from said elongated housing member to said protruding peripheral rim of said drum for stabilizing relative movement between said elongated housing member and said drum during operation of said device.

2. A device as in claim 1 wherein said attachment means is a threaded terminus of said elongated housing member (22) for engaging threads of said end wall of said drum (60).

3. A device as in claim 1 wherein said auxiliary support means includes a locking member (58) to prevent the device from being removed from said drum

4. A device as in claim 1 wherein said puncturing member (30) comprises a hollow puncturing pin extending upward towards said first end of said elongated housing member (22), said pin (30) including a spring (40) for biasing said pressurized container (20) towards said first end of said elongated housing member (22) when said force-applying member (24) is not engaged with said pressurized container (20).

5. A device as in claim 4 wherein said gases and residual contents are emptied into said drum (60) through said hollow puncturing pin (30).

6. A device as in claim 1 wherein said elongated housing member (22) further comprises a shelf member (29) extending from said inner surface of said elongated housing member (22) which shelf member (29) includes an opening through which said puncturing member (30) extends towards said first end of said elongated housing member (22).

7. A device as in claim 1 further comprising an alignment member (38) mounted within said elongated cavity intermediate said first and second ends and through which said puncturing member (30) extends such that said pressurized container (20) is retained in an orientation which is generally parallel to a lengthwise center line of said elongated cavity.

8. A device as in claim 1 further comprising a counter means (52) cooperatively engaged with said puncturing means wherein said counter means (52) records each piercing of said pressurized container (20).

9. A device as in claim 8 wherein said counter means (52) may be reset to its initial counter setting.

10. A device as in claim 8 wherein said counter means (52) is enclosed within a housing such that a portion of said counter means (52) remains visible.

11. A device as in claim 1 wherein said cap (24) is rotatable about a pin (32) between a position directly over said elongated housing member (22) and a position which is not over said elongated housing member (22).

12. A device as in claim 11 further comprising a locking member (34) for retaining said cap (24) in said position directly over said elongated housing member (22).

13. A device as in claim 11 wherein said cap (24) further comprises a height adjustment member (36).

14. A device as in claim 13 wherein said height adjustment member (36) further comprises a recessed magnetic member.

15. A device as in claim 1 wherein a pointed tip of said hollow puncturing pin (30) is of a non-sparking metal.

16. A device as in claim 1 wherein said elongated housing member (22), said force-applying member (24) and said device further including an auxiliary support means (57) are of aluminum.

17. A device as in claim 1 wherein said elongated housing member (22), said force-applying member (24) and said device further including an auxiliary support means (57) are coated with a non-stick coating.

18. A device as in claim 1 wherein said rack gear (26), said paw gear (48), and said activation wheel (28) are of aluminum.

19. A device as in claim 1 wherein said rack gear (26), said paw gear (48), and said activation wheel (28) are coated with a non-stick coating.

## Patentansprüche

1. Einrichtung zum Punktieren eines Druckbehälters (20) zum Entlasten des Drucks darin und zum Ablassen des Restinhalts desselben in eine Trommel (60) eines Typs, der eine Stirnwand mit einem umgebenden, vorstehenden Umfangsrand aufweist, wobei die Einrichtung umfasst:
ein allgemein langgestrecktes Gehäuseelement (22), das einen langgestreckten Hohlraum mit Innen- und Außenflächen und mit Öffnungen an ersten und zweiten Enden desselben zur Aufnahme eines Druckbehälters (20) an dem ersten Ende definiert und ferner ein Befestigungsmittel zum Sichern des zweiten Endes des langgestreckten Gehäuseelements (22) an der Stirnwand der Trommel (60) zur Sammlung durch die Trommel (60) von Inhalten, die aus dem Druckbehälter (20) durch das zweite Ende ausgestoßen werden, aufweist;
ein Punktionselement (30), das innerhalb des langgestreckten Gehäuseelements (22) allgemein parallel zu den Innen- und Außenflächen des langgestreckten Gehäuseelements (22), zwischen den ersten und den zweiten Enden und in einem Abstand von der Innenfläche des langgestreckten Gehäuseelements (22) angebracht ist, um den Druckbehälter (20) in dem langgestreckten Hohlraum zu durchstechen, wodurch Gase und Restinhalte davon durch die Öffnung am zweiten Ende in die Trommel (60) entleert werden;
ein Kraftausübungselement (24), das beweglich an dem langgestreckten Gehäuseelement (22) angebracht ist, um mit dem in dem länglichen Hohlraum positionierten Druckbehälter (20) in Eingriff zu kommen und den Druckbehälter (20) in Richtung auf das zweite Ende des langgestreckten Gehäuseelements (22) und auf das Punktionselement (30) zu drücken;
wobei das Kraftausübungselement umfasst:
eine Kappe (24);
eine Zahnstange (26), die an der Kappe (24) befestigt ist;
ein Klauengetriebe (48), das mit der Zahnstange (26) so verbunden ist, dass eine Drehung des Klauengetriebes (48) eine vertikale Bewegung der Zahnstange (26) bewirkt; und
ein Aktivierungsrad (28), das an dem Klauengetriebe (48) so angebracht ist, dass eine Drehung des Aktivierungsrads (28) eine Drehung des Klauengetriebes (48) bewirkt, wobei eine Drehung des Aktivierungsrads (28) zu einer vertikalen Bewegung der Kappe (24) führt und eine Abwärtsbewegung der Kappe (24) bewirkt, dass die Kappe (24) mit dem in dem langgestreckten Hohlraum angeordneten Druckbehälter (20) in Eingriff kommt und den Druckbehälter (20) in Richtung des zweiten Endes des langgestreckten Gehäuseelements (22) und auf das Punktionselement (30) drückt,
wobei die Vorrichtung ferner ein Hilfsstützmittel aufweist, das sich von dem langgestreckten Gehäuseelement zu dem vorstehenden Umfangsrand der Trommel erstreckt, um die Relativbewegung zwischen dem langgestreckten Gehäuseelement und der Trommel während des Betriebs der Vorrichtung zu stabilisieren.

2. Vorrichtung nach Anspruch 1, wobei das Befestigungsmittel ein Gewindeende des langgestreckten Gehäuseelements (22) zum Eingriff in Gewinde der Stirnwand der Trommel (60) ist.

3. Vorrichtung nach Anspruch 1, wobei das Hilfsstützmittel ein Verriegelungselement (58) umfasst, um zu verhindern, dass die Vorrichtung von der Trommel entfernt wird.

4. Vorrichtung nach Anspruch 1, wobei das Punktionselement (30) einen hohlen Punktionsstift umfasst, der sich nach oben in Richtung auf das erste Ende des langgestreckten Gehäuseelements (22) erstreckt, wobei der Stift (30) eine Feder (40) zum Vorspannen des Druckbehälters (20) in Richtung auf das erste Ende des langgestreckten Gehäuseelements (22) umfasst, wenn das Kraftausübungselement (24) nicht mit dem Druckbehälter (20) in Eingriff steht.

5. Vorrichtung nach Anspruch 4, wobei die Gase und der Restinhalt durch den hohlen Punktionsstift (30) in die Trommel (60) entleert werden.

6. Vorrichtung nach Anspruch 1, wobei das langgestreckte Gehäuseelement (22) ferner ein Regalelement (29) umfasst, das sich von der Innenfläche des langgestreckten Gehäuseelements (22) erstreckt, wobei das Regalelement (29) eine Öffnung umfasst, durch die sich das Punktionselement (30) in Richtung auf das erste Ende des langgestreckten Gehäuseelements (22) erstreckt.

7. Vorrichtung nach Anspruch 1, die ferner ein Ausrichtungselement (38) umfasst, das in dem langgestreckten Hohlraum zwischen ersten und zweiten Enden angebracht ist und durch das sich das Punktionselement (30) so erstreckt, dass der Druckbehälter (20) in einer Orientierung gehalten wird, die im allgemeinen parallel zu einer Längsmittellinie des langgestreckten Hohlraums ist.

8. Vorrichtung nach Anspruch 1, ferner ein Zählermittel (52) umfassend, das mit dem Punktionsmittel zusammenwirkend in Eingriff steht, wobei das Zählermittel (52) jedes Durchstechen des Druckbehälters (20) aufzeichnet.

9. Vorrichtung nach Anspruch 8, wobei das Zählermittel (52) auf seine anfängliche Zählereinstellung zurückgestellt werden kann.

10. Vorrichtung nach Anspruch 8, wobei das Zählermittel (52) in einem Gehäuse eingeschlossen ist, so dass ein Abschnitt des Zählermittels (52) sichtbar bleibt.

11. Vorrichtung nach Anspruch 1, wobei die Kappe (24) um einen Stift (32) zwischen einer Position direkt über dem langgestreckten Gehäuseelement (22) und einer Position, die nicht über dem langgestreckten Gehäuseelement (22) liegt, drehbar ist.

12. Vorrichtung nach Anspruch 11, ferner ein Verriegelungselement (34) umfassend, um die Kappe (24) in der Position direkt über dem langgestreckten Gehäuseelement (22) zu halten.

13. Vorrichtung nach Anspruch 11, wobei die Kappe (24) ferner ein Höhenanpassungselement (36) umfasst.

14. Vorrichtung nach Anspruch 13, wobei das Höhenanpassungselement (36) ferner ein eingelassenes Magnetelement umfasst.

15. Vorrichtung nach Anspruch 1, wobei eine spitz zulaufende Spitze des hohlen Punktionsstiftes (30) aus einem nicht funkenbildenden Metall besteht.

16. Vorrichtung nach Anspruch 1, wobei das langgestreckte Gehäuseelement (22), das Kraftausübungselement (24) und die Vorrichtung, die ferner ein Hilfsstützmittel (57) umfasst, aus Aluminium sind.

17. Vorrichtung nach Anspruch 1, wobei das langgestreckte Gehäuseelement (22), das Kraftausübungselement (24) und die Vorrichtung, die ferner ein Hilfsstützmittel (57) umfasst, mit einer Anti-Haftschicht beschichtet sind.

18. Vorrichtung nach Anspruch 1, wobei die Zahnstange (26), das Klauengetriebe (48) und das Aktivierungsrad (28) aus Aluminium sind.

19. Vorrichtung nach Anspruch 1, wobei die Zahnstange (26), das Klauengetriebe (48) und das Aktivierungsrad (28) mit einer Anti-Haftschicht beschichtet sind.

## Revendications

1. Dispositif pour perforer un récipient sous pression (20) afin d'atténuer la pression à l'intérieur de ce dernier et pour libérer son contenu résiduel dans un fût (60) d'un type ayant une paroi d'extrémité avec un rebord périphérique en saillie, ledit dispositif comprenant :
un élément de boîtier généralement allongé (22) définissant une cavité allongée avec des surfaces interne et externe et avec des ouvertures au niveau de ses première et seconde extrémités pour recevoir un récipient sous pression (20) au niveau de ladite première extrémité et comprenant en outre un moyen de fixation pour fixer ladite seconde extrémité dudit élément de boîtier allongé (22) à ladite paroi d'extrémité dudit fût (60) pour la collecte par ledit fût (60) du contenu expulsé dudit récipient sous pression (20) par ladite seconde extrémité ;
un élément de perforation (30) monté dans ledit élément de boîtier allongé (22) généralement parallèle auxdites surfaces interne et externe dudit élément de boîtier allongé (22), entre lesdites première et seconde extrémités et une distance à partir de ladite surface interne dudit élément de boîtier allongé (22) pour percer ledit récipient sous pression (20) dans ladite cavité allongée moyennant quoi les gaz et son contenu résiduel sont vidés dans ledit fût (60) à travers ladite ouverture au niveau de ladite seconde extrémité ;
un élément d'application de force (24) monté de manière mobile sur ledit élément de boîtier allongé (22) pour mettre en prise ledit récipient sous pression (20) positionné dans ladite cavité allongée et forçant ledit récipient sous pression (20) vers ladite seconde extrémité dudit élément de boîtier allongé (22) et sur ledit élément de perforation (30) ;
dans lequel ledit élément d'application de force comprend :
un capuchon (24) ;
un engrenage à crémaillère (26) fixé audit capuchon (24) ;
un engrenage à cliquet (48) interconnecté avec ledit engrenage à crémaillère (26) de sorte que la rotation dudit engrenage à cliquet (48) provoque le mouvement vertical dudit engrenage à crémaillère (26) ; et
une roue d'activation (28) fixée sur ledit engrenage à cliquet (48) de sorte que la rotation de ladite roue d'activation (28) provoque la rotation dudit engrenage à cliquet (48), dans lequel la rotation de ladite roue d'activation (28) se traduit par le mouvement vertical dudit capuchon (24), et le mouvement descendant dudit capuchon (24) amène ledit capuchon (24) à mettre en prise ledit récipient sous pression (20) positionné dans ladite cavité allongée et à forcer ledit récipient sous pression (20) vers ladite seconde extrémité dudit élément de boîtier allongé (22) et sur ledit élément de perforation (30),
ledit dispositif comprenant en outre un moyen de support auxiliaire pour s'étendre à partir dudit élément de boîtier allongé jusqu'audit rebord périphérique en saillie dudit fût pour stabiliser le mouvement relatif entre ledit élément de boîtier allongé et ledit fût pendant le fonctionnement dudit dispositif.

2. Dispositif selon la revendication 1, dans lequel ledit moyen de fixation est une extrémité filetée dudit élément de boîtier allongé (22) pour mettre en prise les filetages de ladite paroi d'extrémité dudit fût (60).

3. Dispositif selon la revendication 1, dans lequel ledit moyen de support auxiliaire comprend un élément de verrouillage (58) pour empêcher le dispositif d'être retiré dudit fût.

4. Dispositif selon la revendication 1, dans lequel ledit élément de perforation (30) comprend une broche de perforation creuse s'étendant vers le haut vers ladite première extrémité dudit élément de boîtier allongé (22), ladite broche (30) comprenant un ressort (40) pour solliciter ledit récipient sous pression (20) vers ladite première extrémité dudit élément de boîtier allongé (22) lorsque ledit élément d'application de force (24) n'est pas mis en prise avec ledit récipient sous pression (20).

5. Dispositif selon la revendication 4, dans lequel lesdits gaz et le contenu résiduel sont vidés dans ledit fût (60) par ladite broche de perforation creuse (30).

6. Dispositif selon la revendication 1, dans lequel ledit élément de boîtier allongé (22) comprend en outre un élément d'étagère (29) s'étendant à partir de ladite surface interne dudit élément de boîtier allongé (22), lequel élément d'étagère (29) comprend une ouverture à travers laquelle ledit élément de perforation (30) s'étend vers ladite première extrémité dudit élément de boîtier allongé (22).

7. Dispositif selon la revendication 1, comprenant en outre un élément d'alignement (38) monté dans ladite cavité allongée entre lesdites première et seconde extrémités et à travers laquelle ledit élément de perforation (30) s'étend de sorte que ledit récipient sous pression (20) est retenu dans une orientation qui est généralement parallèle à une ligne centrale dans le sens de la longueur de ladite cavité allongée.

8. Dispositif selon la revendication 1, comprenant en outre un moyen antagoniste (52) mis en prise, par coopération, avec ledit moyen de perforation, dans lequel ledit moyen antagoniste (52) enregistre chaque perçage dudit récipient sous pression (20).

9. Dispositif selon la revendication 8, dans lequel ledit moyen antagoniste (52) peut être réinitialisé à son réglage initial antagoniste.

10. Dispositif selon la revendication 8, dans lequel ledit moyen antagoniste (52) est enfermé dans un boîtier de sorte qu'une partie dudit moyen antagoniste (52) reste visible.

11. Dispositif selon la revendication 1, dans lequel ledit capuchon (24) peut tourner autour d'une broche (32) entre une position directement sur ledit élément de boîtier allongé (22) et une position qui n'est pas sur ledit élément de boîtier allongé (22).

12. Dispositif selon la revendication 11, comprenant en outre un élément de verrouillage (34) pour retenir ledit capuchon (24) dans ladite position directement sur ledit élément de boîtier allongé (22).

13. Dispositif selon la revendication 11, dans lequel ledit capuchon (24) comprend en outre un élément d'ajustement de hauteur (36).

14. Dispositif selon la revendication 13, dans lequel ledit élément d'ajustement de hauteur (36) comprend en outre un élément magnétique évidé.

15. Dispositif selon la revendication 1, dans lequel une pointe pointue de ladite broche de perforation creuse (30) est réalisée avec un métal sans production d'étincelles.

16. Dispositif selon la revendication 1, dans lequel ledit élément de boîtier allongé (22), ledit élément d'application de force (24) et ledit dispositif comprenant en outre un moyen de support auxiliaire (57) sont en aluminium.

17. Dispositif selon la revendication 1, dans lequel ledit élément de boîtier allongé (22), ledit élément d'application de force (24) et ledit dispositif comprenant en outre un moyen de support auxiliaire (57) sont recouverts avec un revêtement antiadhésif.

18. Dispositif selon la revendication 1, dans lequel ledit engrenage à crémaillère (26), ledit engrenage à cliquet (48) et ladite roue d'activation (28) sont en aluminium.

19. Dispositif selon la revendication 1, dans lequel ledit engrenage à crémaillère (26), ledit engrenage à cliquet (48) et ladite roue d'activation (28) sont recouverts avec un revêtement antiadhésif.
